# EUROPÄISCHE PATENTANMELDUNG

(11) **EP 4 707 999 A1**
(43) Veröffentlichungstag der Anmeldung: **11.03.2026**
(21) Anmeldenummer: 25196709.7
(22) Anmeldetag: 19.08.2025
(51) Int. Cl.: G06F 3/01, G06F 3/0488, G06T 13/00

(54) **VERFAHREN ZUR POSITIONIERUNG EINES INDUSTRIELLEN SICHERHEITSSENSORS IN EINER INDUSTRIEANLAGE MITTELS AUGMENTED REALITY**

(30) Priorität: 04.09.2024 DE 102024125297
(71) Anmelder: SICK AG, 79183 Waldkirch (DE)
(72) Erfinder: Gebauer, Jens, 79183 Waldkirch (DE); Steinkemper, Heiko, 79183 Waldkirch (DE); Hofmann, Christoph, 79183 Waldkirch (DE)
(74) Vertreter: Manitz Finsterwald Patent- und Rechtsanwaltspartnerschaft mbB

(57) **Zusammenfassung**

Die Erfindung betrifft ein Verfahren zur Positionierung zumindest eines realen Sensors, insbesondere eines Sicherheitssensors oder einer Kamera für industrielle Sicherheitsanwendungen, in einer realen Umgebung einer Industrieanlage mittels einer Augmented-Reality-Ansicht, welche auf der realen Umgebung der Industrieanlage basiert, wobei zumindest ein simulierter Parameter eines virtuellen Sensors mittels einer Anzeigeeinrichtung für einen Anwender in der Augmented-Reality-Ansicht visualisiert wird, wobei der virtuelle Sensor auf dem zu positionierenden realen Sensor basiert, wobei der simulierte Parameter zumindest einen Positionsparameter umfasst, wobei der zumindest eine Positionsparameter eine Position und/oder eine Ausrichtung des virtuellen Sensors in der Augmented-Reality-Ansicht angibt, wobei eine Änderung des Positionsparameters erhalten wird, wobei der anhand der erhaltenen Änderung aktualisierte Positionsparameter mittels der Anzeigeeinrichtung in der Augmented-Reality-Ansicht für den Anwender visualisiert wird, und wobei zumindest ein Ausgabeparameter ausgegeben wird, welcher auf dem aktualisierten Positionsparameter des virtuellen Sensors basiert und welcher die Positionierung des realen Sensors in der realen Umgebung ermöglicht.

## Beschreibung

Die Erfindung betrifft Verfahren, eine Anzeigeeinrichtung und ein System zur Positionierung zumindest eines realen Sensors, insbesondere eines Sicherheitssensors oder einer Kamera für industrielle Sicherheitsanwendungen, in einer realen Umgebung einer Industrieanlage mittels einer Augmented-Reality-Ansicht.

Industrielle Sicherheitssensoren oder Kameras für industrielle Sicherheitsanwendungen erlauben eine sichere Umgebungswahrnehmung, insbesondere eine sichere dreidimensionale Umgebungswahrnehmung, mit der die Sicherheit und Effizienz industrieller Prozesse in Industrieanlagen erhöht werden können. Beispiele für industrielle Sicherheitssensoren oder Kameras für industrielle Sicherheitsanwendungen sind ToF (Time of Flight)-Kameras, Laserscanner, 2D-Kameras, 3D-Kameras, LiDAR (Light Detection And Ranging)-Sensoren, Radarsensoren, Ultraschallsensoren und weitere.

Es versteht sich, dass eine Industrieanlage hier breit zu verstehen ist und beispielsweise eine Fabrikhalle, eine Produktionsanlage, eine Lagerhalle, ein Logistikzentrum, eine Anlage für Tierhaltung, eine Anlage der chemischen Industrie, eine Abfallverbrennungsanlage oder ein Kraftwerk umfassen kann. Im Folgenden wird nur noch von einem (realen) Sensor gesprochen, wobei sowohl industrielle Sicherheitssensoren als auch Kameras für industrielle Sicherheitsanwendungen gemeint sind.

Nach heutigem Stand verlangt die Positionierung und Konfiguration eines realen Sensors in einer realen Umgebung einer Industrieanlage ein sehr hohes technisches Verständnis und sehr gute Kenntnis über das physikalische wie technische Funktionsprinzip des Sensors. Zudem werden echte, mit dem vorpositionierten realen Sensor aufgenommene Messdaten benötigt, die in einer rein virtuellen 3D-Konfigurationsanwendung für den Anwender dargestellt werden. Es wird dann von dem Anwender eine nahezu perfekte Vorstellungskraft verlangt, um aufwändige, in Gedanken ausgeführte 3D-Transformationen in die reale Anwendung zu überführen. Es versteht sich, dass ein solcher Positionierungs- und Konfigurationsprozess auch nur möglich ist, wenn der reale Sensor bereits vorpositioniert und angeschlossen ist und echte Messdaten vorhanden sind. Für einen initialen Positionierung- und Konfigurationsschritt ist jedoch unklar, ob der reale Sensor überhaupt an einer geeigneten Stelle installiert ist, damit die sensorischen Fähigkeiten des realen Sensors in der Anwendung überhaupt zum Tragen kommen, oder ob der Erfassungsbereich des Sensors überhaupt für die beabsichtigte Anwendung ausreicht.

Der Erfindung liegt die Aufgabe zugrunde, die Positionierung eines realen Sensors in einer realen Umgebung einer Industrieanlage zu verbessern und insbesondere für den Anwender einfacher zu gestalten.

Zur Lösung der Aufgabe ist ein Verfahren mit den Merkmalen des Anspruchs 1 vorgesehen. Vorteilhafte Ausbildungen der Erfindung sind den Unteransprüchen, der Beschreibung und den Zeichnungen zu entnehmen.

In dem erfindungsgemäßen Verfahren nach Anspruch 1 zur Positionierung zumindest eines realen Sensors, insbesondere eines Sicherheitssensors oder einer Kamera für industrielle Sicherheitsanwendungen, in einer realen Umgebung einer Industrieanlage mittels einer Augmented-Reality-Ansicht wird zumindest ein simulierter Parameter eines virtuellen Sensors mittels einer Anzeigeeinrichtung für einen Anwender in der Augmented-Reality-Ansicht visualisiert.

Es versteht sich, dass, wenn im Folgenden von (zumindest) einem realen Sensor gesprochen wird, auch mehrere reale Sensoren gemeint sein können. Die Erfindung bezieht sich somit ebenfalls auf die Positionierung (und Konfiguration) von mehreren realen Sensoren. Bei dem realen Sensor handelt es sich bevorzugt um eine ToF-Kamera, einen Laserscanner, eine 2D-Kamera, eine 3D-Kamera, einen Lidar-Sensor, einen Radarsensor oder einen Ultraschallsensor.

Erfindungsgemäß basiert die Augmented-Reality-Ansicht oder Augmented-Reality-Umgebung auf der realen Umgebung der Industrieanlage. Die Augmented-Reality-Ansicht kann beispielsweise eine Ansicht oder Darstellung der realen Umgebung in der Industrieanlage sein, wobei in der Ansicht oder Darstellung der realen Umgebung Visualisierungen von simulierten Elementen eingefügt sein können.

Erfindungsgemäß basiert der virtuelle Sensor auf dem zu positionierenden realen Sensor. Dies kann bedeuten, dass der virtuelle Sensor den zu positionierenden realen Sensor widerspiegelt, ein Modell des realen Sensors ist, und/oder eine virtuelle Kopie des realen Sensors darstellt, sodass Eigenschaften und/oder Parameter des virtuellen Sensors auf Eigenschaften und/oder Parameter des realen Sensors übertragbar sind und umgekehrt. Beispielsweise kann zumindest eine Eigenschaft und/oder ein Parameter des virtuellen Sensors mit einer Eigenschaft und/oder einem Parameter des zu positionierenden realen Sensors identisch sein.

Es versteht sich, dass jeder der im Folgenden genannten Parameter auch als Parametersatz zu verstehen ist. Ein Parameter kann beispielsweise mehrere Werte umfassen oder ein Vektor oder Array mit mehreren Elementen sein. Zudem versteht sich, dass, auch wenn auf einen Parameter Bezug genommen wird, auch mehrere Parameter, und insbesondere mehrere Parameter mit der gleichen Bezeichnung, gemeint sein können.

Erfindungsgemäß umfasst der zumindest eine simulierte Parameter zumindest einen Positionsparameter, wobei der zumindest eine Positionsparameter eine Position und/oder eine Ausrichtung des virtuellen Sensors in der Augmented-Reality-Ansicht angibt. Es versteht sich, dass der Positionsparameter eine (zukünftige) reale Position des realen Sensors in der realen Umgebung für den Anwender in der Augmented-Reality-Ansicht simuliert. Der Positionsparameter stellt insbesondere einen initialen Positionsparameter dar, der veränderbar und anhand der Änderung aktualisierbar ist.

In dem erfindungsgemäßen Verfahren wird ferner eine Änderung des Positionsparameters erhalten und der anhand der erhaltenen Änderung aktualisierte Positionsparameter wird mittels der Anzeigeeinrichtung in der Augmented-Reality-Ansicht für den Anwender visualisiert. Dabei ist es ebenfalls möglich, dass die Änderung mittels dem Anzeigegerät erhalten wird und der Positionsparameter mittels dem Anzeigegerät aktualisiert wird. Zusätzlich oder alternativ ist denkbar, dass zumindest ein von der Anzeigeeinrichtung gesondertes Gerät, wie beispielsweise eine Recheneinheit oder ein Prozessor eine durch eine Kamera oder Benutzerschnittstelle erfasste Änderung des Positionsparameters erhält, den Positionsparameter anhand der erhaltenen Änderung aktualisiert, und den aktualisierten Positionsparameter an die Anzeigeeinrichtung übermittelt und/oder von dieser abgerufen werden kann. Der aktualisierte Positionsparameter kann dann mittels der Anzeigeeinrichtung in der Augmented-Reality-Ansicht visualisiert werden, indem beispielsweise eine bisherige Visualisierung des (alten) Positionsparameters aktualisiert und/oder angepasst wird oder eine neue Visualisierung des (aktualisierten) Positionsparameter hinzugefügt wird.

In dem erfindungsgemäßen Verfahren wird schließlich zumindest ein Ausgabeparameter ausgegeben, welcher auf dem aktualisierten Positionsparameter des virtuellen Sensors basiert und welcher die Positionierung des realen Sensors in der realen Umgebung ermöglicht. Es versteht sich, dass der Ausgabeparameter den Positionsparameter und/oder einen durch Umrechnung des Positionsparameters erhaltenen Umrechnungsparameter umfassen kann. Zusätzlich oder alternativ kann der Ausgabeparameter eine Position und/oder Ausrichtung des virtuellen Sensors relativ zu einer Positionsmarke oder der Anzeigeeinrichtung angeben.

Erfindungsgemäß ermöglicht der Ausgabeparameter die Positionierung des realen Sensors in der realen Umgebung. In anderen Worten liefert der Ausgabeparameter die Information, anhand welcher der reale Sensor in der realen Umgebung (händisch oder maschinell) positioniert werden kann.

Der Erfindung liegt mit anderen Worten der Gedanke zugrunde, dem Anwender die Möglichkeit zu geben, die Positionierung, und bevorzugt auch die Konfiguration, des Sicherheitssensors (insbesondere in drei Dimensionen) aus eigener Perspektive mittels räumlicher Visualisierung in der Augmented-Reality-Ansicht zu planen, anzupassen und/oder optimieren zu können. Über die Augmented-Reality-Ansicht kann der Anwender auf einfache und flexible Weise austesten, an welcher Stelle der reale Sensor (zukünftig) in der realen Umgebung der Industrieanlage positioniert und/oder montiert werden soll. Gleiches oder Ähnliches gilt für die Konfiguration von Schutz- und Warnfeldern bei Laserscannern bzw. Schutz- und Warnvolumen bei Kameras oder Radarsensoren. Dimensionierung und Orientierung des virtuellen Sensors können auf einfache und flexible Weise angepasst werden und deren Visualisierung in der Augmented-Reality-Ansicht auf einfache und flexible Weise eingefügt und/oder aktualisiert werden. Die Positionierung (und bevorzugt auch die Konfiguration) des virtuellen Sensors wird dann mittels eines Ausgabeparameters ausgegeben und ist idealerweise auf die Positionierung des realen Sensors in der realen Umgebung der Industrieanlage übertragbar.

Kurz gesagt, ein Modell zumindest eines realen Sensors kann in der Augmented-Reality-Ansicht positioniert (und/oder konfiguriert) werden, und der reale Sensor kann dann auf Basis dieser Positionierung (und/oder Konfiguration) des virtuellen Sensors in der realen Umgebung positioniert (und/oder konfiguriert) werden.

Im Gegensatz zu der bisherigen Vorgehensweise muss dabei nicht zwangsweise der reale Sensor zur Verfügung stehen und es müssen auch keine echten mit dem realen Sensor aufgenommene Daten vorliegen. Die Position des virtuellen Sensors kann in der Augmented-Reality-Ansicht, die auf dem, insbesondere dreidimensionalen, Raum der realen Umgebung basiert, auf einfache und flexible Weise angepasst und optimiert werden. Es ist denkbar, dass zusätzlich das Schutzfeld, Sichtfeld und/oder Field-of-View (FOV) des virtuellen Sensors visualisiert wird. Das sogenannte Schutzfeld ist ein Teil des Sichtfelds, wobei ein Warnsignal ausgegeben werden kann, wenn das Schutzfeld, z.B. von einer Person oder einem, insbesondere autonomen, Roboter verletzt wird. Das Schutzfeld des virtuellen Sensors kann das gesamte Sichtfeld des virtuellen Sensors oder auch nur einen Anteil an dem Sichtfeld des virtuellen Sensors umfassen. Entsprechendes gilt für den realen Sensor. Es ist auch denkbar, dass in dem Verfahren eine Auswahl an mehreren (verschiedenen) realen und dementsprechend virtuellen Sensoren ermöglicht ist, so dass für jede Anwendung der optimale Sensor gefunden werden kann.

Generell kann der an sich komplexe Vorgang der Positionierung (und bevorzugt auch der Konfiguration) eines Sicherheitssensors in einer Umgebung einer Industrieanlage verbessert und insbesondere einfacher gestaltet werden.

Es können zudem mehrere virtuelle Sensoren im Wesentlichen gleichzeitig oder in einem einzigen Verfahrensdurchlauf positioniert werden, sodass beispielsweise Lücken zwischen den Überwachungsbereichen der virtuellen Sensoren und realen Barrieren (z.B. Wänden) in der realen Umgebung aufgedeckt und beseitigt werden können. Es können auch mehrere Sensoren (und entsprechende Schutzfelder) optimal aufeinander abgestimmt werden. Dies kann insbesondere vorteilhaft sein, wenn eine lückenlose Überwachung eines großen Schutzfeldes, welches nur mit einer Vielzahl an Sensoren abgedeckt werden kann, oder eine gezielte Überlagerung von Schutzfeldern gewünscht ist, um beispielsweise in besonders kritischen Bereichen der Industrieanlage eine erhöhte Sicherheit durch redundante Überwachung zu erreichen. Dabei ist denkbar, dass Überschneidungsbereiche der Schutzfelder von mehreren virtuellen Sensoren ebenfalls berechnet und, und beispielweise durch abweichende Farbgebung, in der Augmented-Reality-Ansicht visualisiert werden. Zudem ist das Verfahren Computer-implementiert und insbesondere webbasiert umsetzbar, sodass beispielsweise ein Experte mittels digitaler Fernkommunikation beratend hinzugezogen werden kann.

Gemäß einer Ausführungsform umfasst der zumindest eine Positionsparameter des virtuellen Sensors einen x-Koordinatenwert, y-Koordinatenwert, z-Koordinatenwert, und/oder einen Ausrichtungswinkel des virtuellen Sensors. Der Ausrichtungswinkel des virtuellen Sensors kann einen Azimutwinkel und/oder einen Höhenwinkel der Sichtlinie des virtuellen Sensors umfassen.

Gemäß einer Ausführungsform umfasst der in der Augmented-Reality-Ansicht visualisierte zumindest eine simulierte Parameter des virtuellen Sensors zusätzlich zumindest einen Konfigurationsparameter, der eine Konfiguration des virtuellen Sensors angibt. Vorzugsweise entspricht der zumindest eine Konfigurationsparameter des virtuellen Sensors zumindest einer möglichen Konfiguration des realen Sensors. In dem Verfahren kann dann, alternativ oder zusätzlich, eine Änderung des (initialen) Konfigurationsparameters erhalten werden. Der anhand der erhaltenen Änderung aktualisierte Konfigurationsparameter wird mittels der Anzeigeeinrichtung in der Augmented-Reality-Ansicht für den Anwender visualisiert, zum Beispiel durch adaptive

Anpassung der bisherigen Visualisierung oder durch Hinzufügen einer neuen Visualisierung. Ferner wird ein weiterer Ausgabeparameter ausgegeben, welcher auf dem aktualisierten Konfigurationsparameter des virtuellen Sensors basiert und welcher die Konfiguration des realen Sensors in der realen Umgebung ermöglicht. Es versteht sich, dass der auf dem aktualisierten Positionsparameter basierende Ausgabeparameter und der auf dem aktualisierten Konfigurationsparameter basierende weitere Ausgabeparameter im Wesentlichen zusammen oder zeitlich versetzt ausgegeben werden können, und insbesondere als ein einziger Parameter und/oder als Parametersatz ausgegeben werden können.

Gemäß einer Ausführungsform umfasst der zumindest eine Konfigurationsparameter des virtuellen Sensors ein maximales Sichtfeld, einen Anteil an dem maximalen Sichtfeld, eine Ausrichtung, Größe und/oder Ausdehnung eines Schutz- oder Warnfeldes, eine Reichweite, und/oder eine Auflösung des virtuellen Sensors. Mit der Reichweite des Sensors kann eine maximale Ausdehnung des Schutzfelds des Sensors vor einem Hintergrund und/oder in den freien Raum gemeint sein. Vorzugsweise basiert der Konfigurationsparameter des virtuellen Sensors auf einem oder entspricht einem möglichen Konfigurationsparameter des realen Sensors, sodass der Konfigurationsparameter des virtuellen Sensors auf den realen Sensor übertragbar ist und umgekehrt.

Gemäß einer Ausführungsform ist die Position des virtuellen Sensors für den Anwender in der Augmented-Reality-Ansicht veränderbar und insbesondere verschiebbar und/oder verdrehbar. In anderen Worten ist es dem Anwender möglich, in der Augmented-Reality-Ansicht den virtuellen Sensor bzw. die Visualisierung des virtuellen Sensors zu verändern und insbesondere zu verschieben und/oder zu verdrehen, sodass auf diese Weise die Änderung des Positionsparameters erhalten werden kann.

Gemäß einer Ausführungsform ist Anzeigeeinrichtung eine Mixed-Reality-Anzeige oder Augmented-Reality-Anzeige. Vorzugweise ist die Anzeigeeinrichtung eine Augmented-Reality-Brille, ein Laptop, ein Smartphone und/oder ein Tablet. Die Anzeigeeinrichtung ist bevorzugt mobil und in der realen Umgebung bewegbar, um eine Perspektive der Augmented-Reality-Ansicht zu verändern. Dies kann den Anwender in die Lage versetzen, immer neue Perspektiven in der Augmented-Reality-Ansicht betrachten zu können, um die Positionierung und Konfiguration des virtuellen Sensors von allen Seiten zu prüfen und zu optimieren. So ist es beispielsweise denkbar, dass die Anzeigeeinrichtung von dem Anwender mitgetragen wird. Wenn sich der Anwender dann in der realen Umgebung bewegt, kann die Perspektive der Augmented-Reality-Ansicht derart verändert werden, dass sich der Anwender gleichsam um den virtuellen Sensor herumbewegen und diesen von allen Seiten betrachten kann. Auf diese Weise können zum Beispiel Lücken zwischen dem Schutzfeld des virtuellen Sensors und Barrieren in der realen Umgebung festgestellt und behoben werden. Vorzugsweise ist vorstellbar, dass die Position der Anzeigeeinrichtung in der realen Umgebung bekannt ist und eine Änderung der Position der Anzeigeeinrichtung in der realen Umgebung beispielsweise mittels Odometrie nachverfolgbar ist. Es kann vorzugsweise zu jedem Zeitpunkt möglich sein, zu Dokumentationszwecken Screenshots der Augmented-Reality-Ansicht zu machen.

Gemäß einer Ausführungsform umfasst das Verfahren ferner das Anlegen der Augmented-Reality-Ansicht und/oder das Anlegen des virtuellen Sensors.

Gemäß einer Ausführungsform wird die Augmented-Reality-Ansicht mittels der Anzeigeeinrichtung angelegt. Die Anzeigeeinrichtung kann dafür beispielsweise einen Sensor, einen Scanner oder eine Kamera umfassen, mit dem oder der die reale Umgebung gescannt bzw. erfasst wird. Zusätzlich oder alternativ ist vorstellbar, dass die Augmented-Reality-Ansicht angelegt wird, indem mittels der Anzeigeeinrichtung eine in der realen Umgebung angebrachte Positionsmarke erfasst wird, beispielsweise ein maschinenlesbarer Code, insbesondere ein QR-Code oder RFID-Tag. Die Positionsmarke wird bevorzugt mit einer von der Anzeigeeinrichtung umfassten Kamera oder einem RFID-Lesegerät erfasst. Durch das Erfassen der Positionsmarke kann ein Modell der realen Umgebung erhalten werden. Auf dem Positionsmarker können bevorzugt auch weitere Informationen gespeichert werden, die u.a. den Konfigurationsparameter des virtuellen Sensors betreffen und die dann von der Anzeigeeinrichtung ausgelesen werden können. Beispielweise kann über den Positionsmarker die Information erhalten werden, welcher reale Sensor und dementsprechend, welcher virtuelle Sensor verwendet werden soll, welche und wie viele Sensoren oder Schutzfelder zum Einsatz kommen sollen, welche Sensorauflösung die Sensoren bieten sollen, ob und welche Einschränkungen der Positionsmöglichkeiten bestehen und weiteres.

Zudem ist denkbar, dass durch Erfassen der Positionsmarke bevorzugt eine initiale Position der Anzeigeeinrichtung in dem Modell der realen Umgebung feststellbar ist. So kann beispielsweise aus einer erfassten optischen Verzerrung der Positionsmarke die Position und Ausrichtung der Anzeigeeinrichtung in der realen Umgebung errechnet werden. Zusätzlich oder alternativ kann die Position der Anzeigeeinrichtung mittels in der realen Umgebung angebrachte Markierungen und/oder Sensoren, zum Beispiel Kameras oder Funkanker, ermittelt und nachverfolgt werden. Zusätzlich oder alternativ kann die Anzeigeeinrichtung für denselben Zweck ein GPS-Modul umfassen.

Der Erhalt des Modells der realen Umgebung erlaubt die Feststellung von Überschneidungen des Sichtfelds und/oder des Schutzfeldes des virtuellen Sensors mit realen Objekten und/oder Abschattungen durch reale Objekte. Auf diese Weise können reale Objekte und Barrieren in der realen Umgebung berücksichtigt werden. Vorzugsweise werden solche Überschneidungen anhand des Modells der realen Umgebung festgestellt und in der Augmented-Reality-Ansicht visualisiert.

Gemäß einer Ausführungsform wird der zumindest eine simulierte Parameter, insbesondere der Positionsparameter und/oder der Konfigurationsparameter, als zumindest eine geometrische Form in der Augmented-Reality-Ansicht visualisiert. Vorzugsweise wird der zumindest eine simulierte Parameter in der Augmented-Reality-Ansicht als Polyeder (z.B. als Pyramide) oder als Kegel angezeigt. Der simulierte Parameter wird bevorzugt in der Augmented-Reality-Ansicht als eine in Farbe dargestellte geometrische Form angezeigt. So ist vorstellbar, dass das durch die geometrische Form begrenzte Volumen, zumindest eine Seitenfläche der geometrischen Form und/oder zumindest eine Kante der geometrischen Form in schwarz, grau, weiß, gelb, grün, rot oder in jeder weiteren möglichen Farbe dargestellt wird oder auch alle Seitenflächen und/oder Kanten der in der Augmented-Reality-Ansicht angezeigten geometrischen Form in schwarz, grau, weiß, gelb, grün, rot oder in jeder weiteren möglichen Farbe dargestellt werden.

Vorzugsweise wird der zumindest eine simulierte Parameter, insbesondere der Positionsparameter und/oder der Konfigurationsparameter, zusätzlich als Textanzeige in der Augmented-Reality-Ansicht visualisiert. So ist vorstellbar, dass Hilfestellungen, wie beispielsweise Toleranzbereiche von Schutzfeldern oder Schutzvolumina oder die Abmessungen eines sogenannten Unterkriechvolumens (besonders relevant für sehr nah gegenüber einer Oberfläche, beispielsweise 30 cm über Boden, positionierte Kameras) eingeblendet werden, die vom Sensor abgesichert werden müssen. Vorzugsweise ist auch denkbar, dass angezeigt wird, welche Auflösung welcher Sensor in welcher Entfernung leisten kann. Gemäß einer Ausführungsform werden die Maße des Schutzfelds (also beispielsweise Länge, Breite und/oder Höhe) des zumindest einen virtuellen Sensors visualisiert und/oder werden Abstände von Schutzfeldern mehrerer virtueller Sensoren zueinander visualisiert und/oder werden der Abstand des Schutzfelds des virtuellen Sensors zu einer Markierung oder einem Referenzmarker in der realen Umgebung visualisiert (jeweils z.B. als Zahlenwerte).

Die Anzeigeeinrichtung kann zusätzlich zu einer 2D-Kamera auch einen Lidar-Sensor umfassen, um Oberflächen der realen Umgebung zu erfassen, oder auf andere Weise Oberflächendaten erhalten. So kann neben oder im dem Positionierungs- und Konfigurierungsprozess (im Hintergrund) ein Oberflächenmodell berechnet werden. Mit dessen Hilfe kann der lichte Abstand eines Schutzfelds des virtuellen Sensors zu einem realen Objekt oder einer realen Geometrie (z.B. der kürzeste Abstand) ausgegeben werden. Die Bereitstellung dieser Information über den Abstand kann unter Gesichtspunkten der Sicherheit Vorteile bieten. Außerdem kann, insbesondere mit mithilfe des Oberflächenmodells, während des Prozesses fortlaufend geprüft werden, ob konfigurierte Schutzfelder mit der realen Geometrie kollidieren und eine etwaige Kollision in der Visualisierung angezeigt werden (z.B. durch Farbänderung).

Gemäß einer Ausführungsform wird die Auflösung des virtuellen Sensors in Abhängigkeit von der Reichweite als Schattierung, Transparenzverlauf und/oder als Farbverlauf in der geometrischen Form visualisiert. Auf diese Weise können mehrere Konfigurationsparameter des virtuellen Sensors zusammen in einer einzelnen geometrischen Form für den Anwender visualisiert werden.

Gemäß einer Ausführungsform wird die Änderung des Positionsparameters und/oder des Konfigurationsparameters durch Benutzereingabe erhalten. So ist es beispielsweise denkbar, dass der Anwender mittels einer Benutzerschnittstelle (z.B. einer GUI) die gewünschte Änderung des Positionsparameters und/oder des Konfigurationsparameters eingeben und/oder auswählen kann. Zusätzlich oder alternativ kann es vorzugsweise für den Anwender möglich sein, den Positionsparameter und/oder den Konfigurationsparameter durch eine Geste oder Spracheingabe, die bevorzugt durch eine Kamera beziehungsweise ein Mikrophon erfasst wird, zu ändern. In anderen Worten kann es dem Anwender, insbesondere durch Gesten- oder Sprachsteuerung, möglich sein, die Position und/oder die Konfiguration des virtuellen Sensors in der Augmented-Reality-Ansicht interaktiv zu verändern und insbesondere die Position und/oder das Schutzfeld des virtuellen Sensors zu verschieben, zu verdrehen, auszudehnen, zu verbreitern, zu verlängern, zu verkleinern und/oder zu verzerren. Die Sprachsteuerung kann bevorzugt unterstützt werden, indem durch ein sogenanntes Large Language Model Sprachbefehle in "Maschinencode" übersetzt werden.

Es ist vorzugsweise vorstellbar, dass der Positionsparameter und/oder der Konfigurationsparameter inkrementell oder stufenlos geändert werden können.

Zusätzlich oder alternativ wird gemäß einer weiteren Ausführungsform die Änderung des Positionsparameters und/oder des Konfigurationsparameters durch Erfassen von zumindest einer Markierung, Kontur und/oder Oberfläche in der realen Umgebung erhalten, wobei die Markierung, Kontur und/oder Oberfläche bevorzugt mit einer von der Anzeigeeinrichtung umfassten Kamera erfasst wird. Die Position und/oder das Schutzfeld des virtuellen Sensors in der Augmented-Reality-Ansicht werden dabei vorzugsweise anhand der erfassten Markierung, Kontur und/oder Oberfläche in der realen Umgebung (automatisch) ausgerichtet. Genauer werden die Position und/oder das Schutzfeld des virtuellen Sensors bevorzugt anhand der erfassten Markierung, Kontur und/oder Oberfläche derart verändert, und insbesondere derart verschoben, verdreht, ausgedehnt, verbreitert, verlängert, verkleinert und/oder verzerrt, dass das Schutzfeld des virtuellen Sensors mit der erfassten Markierung, Kontur und/oder Oberfläche abschließt und/oder an dieser zentriert ist und/oder einen bestimmten Abstand zu der dieser hat oder einnimmt. Auf diese Weise kann das Positionieren und/oder Konfigurieren des virtuellen Sensors, und insbesondere einer Vielzahl von virtuellen Sensoren, in der Augmented-Reality-Ansicht vereinfacht und/oder beschleunigt werden. Zudem kann verhindert werden, dass eine unerwünschte Lücke oder ein nicht abgedeckter Bereich zwischen dem Schutzfeld des virtuellen Sensors und einer Barriere in der realen Umgebung verbleiben.

Gemäß einer Ausführungsform ist der aktualisierte Positionsparameter und/oder der aktualisierte Konfigurationsparameter bevorzugt fixierbar und/oder unveränderbar. Vorzugsweise ist die Position des virtuellen Sensors, die Ausrichtung des virtuellen Sensors, die Ausrichtung des Schutzfeldes, und/oder die Größe des Schutzfeldes fixierbar, wobei der jeweils andere Freiheitsgrad frei änderbar bleibt. Daran anschließend ist ebenfalls denkbar, dass vorzugsweise die Position und/oder das Schutzfeld des virtuellen Sensors, und insbesondere eine Ecke, Kante und/oder Seitenfläche des Schutzfelds des virtuellen Sensors, wie hierin beschrieben an der Markierung, Kontur und/oder Oberfläche in der realen Umgebung automatisch ausgerichtet werden können und dann fixiert und/oder für weitere Änderungen gesperrt werden können. In anderen Worten kann die Ausrichtung der Position und/oder des Schutzfelds des virtuellen Sensors an der Markierung, Kontur und/oder Oberfläche bevorzugt nicht mehr von dem Anwender geändert werden, sodass nur noch andere Freiheitsgrade des virtuellen Sensors für den Anwender veränderbar sind. Auf diese Weise kann verhindert werden, dass eine Lücke zwischen dem Schutzfeld des virtuellen Sensors und einer Barriere in der realen Umgebung verbleibt, die von dem Anwender womöglich hätte übersehen werden können. Dies erlaubt, Fehler zu reduzieren oder möglichst zu vermeiden.

Gemäß einer Ausführungsform wird eine verbotene Änderung des Positionsparameters und/oder des Konfigurationsparameters des virtuellen Sensors in der Augmented-Reality-Ansicht als Färbänderung der geometrischen Form visualisiert. Auf diese Weise kann dem Anwender beispielsweise interaktiv und unmittelbar angezeigt werden, wenn mit der Änderung des Konfigurationsparameters des virtuellen Sensors festgelegte Toleranzen für einen Konfigurationsparameter des realen Sensors überschritten werden oder mit der Änderung des Positionsparameters des virtuellen Sensors eine Position des virtuellen Sensors ausgewählt wird, die nicht auf den realen Sensor übertragbar ist (weil der reale Sensor an der entsprechenden Stelle in der realen Umgebung nicht positioniert und/oder angeschlossen werden kann).

Gemäß einer Ausführungsform wird eine verbotene Änderung des Positionsparameters und/oder des Konfigurationsparameters des virtuellen Sensors in der Augmented-Reality-Ansicht als Färbänderung der geometrischen Form visualisiert, wenn festgestellt wird, dass das veränderte Schutzfeld des virtuellen Sensors mit einem realen Objekt kollidiert, an einer Markierung in der realen Umgebung ausgerichtet ist und/oder die Markierung erfasst.

Gemäß einer weiteren Ausführungsform wird der reale Sensor basierend auf dem Ausgabeparameter in der realen Umgebung positioniert. Mit dem in der realen Umgebung positionierten realen Sensor werden dann reale Messdaten erfasst, wobei durch Vergleich von mit dem virtuellen Sensor erfassten simulierten Messwerten mit den realen Messwerten eine Validierung der Positionierung und/oder Konfiguration des realen Sensors in der realen Umgebung vorgenommen wird. So kann beispielsweise eine Testmarkierung und/oder ein Testobjekt mit bekannten Abmessungen, bekannter Form und/oder bekanntem Muster in das Schutzfeld des positionierten realen Sensors platziert und reale Messdaten von der Testmarkierung und/oder dem Testobjekt erfasst werden. Zudem werden mit dem virtuellen Sensor von der Testmarkierung oder dem Testobjekt erfasste Messdaten simuliert. Der Abgleich der realen Messdaten mit den simulierten Messdaten erlaubt dann eine Validierung der Positionierung und/oder Konfiguration des realen Sensors in der realen Umgebung. So ist vorzugsweise vorstellbar, dass mit der Testmarkierung der Abschluss des Schutzfeldes des virtuellen Sensors an einer Oberfläche, und insbesondere einer Bodenfläche, oder die Sichtlinie des virtuellen Sensors in der realen Umgebung nachgezeichnet oder markiert wird. In den realen Messdaten muss dann erkennbar sein, dass die Testmarkierung das Sichtfeld des realen Sensors umrahmt beziehungsweise im Sichtfeld des realen Sensors zentriert ist, um die Positionierung und/oder Konfiguration des realen Sensors in der realen Umgebung zu validieren. Zusätzlich oder alternativ ist denkbar, dass eine in den Messdaten erkennbare optische Verzerrung des Testobjekts übereinstimmen muss, um die Positionierung und/oder Konfiguration des realen Sensors zu validieren.

Gemäß einer Ausführungsform wird (zumindest) ein Unterschied zwischen den realen und simulierten Messwerten erkannt und/oder für den Anwender mittels der Anzeigeeinrichtung in der Augmented-Reality-Ansicht visualisiert. Auf den visualisierten Unterschied hin wird dann die Positionierung des realen Sensors in der realen Umgebung mittels der Augmented-Reality-Ansicht durch Verändern und insbesondere durch Verschieben und/oder Verdrehen der Position des virtuellen Sensors in der Augmented-Reality-Ansicht und Ausgabe eines aktualisierten Ausgabeparameters iteriert.

Weiterer Gegenstand der Erfindung ist eine Anzeigeeinrichtung zur Positionierung zumindest eines realen Sensors, insbesondere eines Sicherheitssensors oder einer Kamera für industrielle Sicherheitsanwendungen, in einer realen Umgebung einer Industrieanlage mittels einer Augmented-Reality-Ansicht, welche auf der realen Umgebung der Industrieanlage basiert. Die erfindungsgemäße Anzeigeeinrichtung ist dazu ausgebildet, zumindest einen simulierten Parameter eines virtuellen Sensors für einen Anwender in der Augmented-Reality-Ansicht zu visualisieren, wobei der virtuelle Sensor auf dem zu positionierenden realen Sensor basiert, wobei der simulierte Parameter zumindest einen Positionsparameter umfasst, wobei der zumindest eine Positionsparameter eine Position und/oder eine Ausrichtung des virtuellen Sensors in der Augmented-Reality-Ansicht angibt. Die Anzeigeeinrichtung ist ferner dazu ausgebildet, eine Änderung des Positionsparameters zu erhalten, den anhand der erhaltenen Änderung aktualisierten Positionsparameter in der Augmented-Reality-Ansicht für den Anwender zu visualisieren, und einen Ausgabeparameter auszugegeben, welcher auf dem aktualisierten Positionsparameter des virtuellen Sensors basiert und welcher die Positionierung des realen Sensors in der realen Umgebung ermöglicht.

Weiterer Gegenstand der Erfindung ist System zur Positionierung zumindest eines realen Sensors, insbesondere eines Sicherheitssensors oder einer Kamera für industrielle Sicherheitsanwendungen, in einer realen Umgebung einer Industrieanlage mittels einer Augmented-Reality-Ansicht, welche auf der realen Umgebung der Industrieanlage basiert, wobei das System eine hierin beschriebene Anzeigeeinrichtung und den zumindest einen realen Sensor umfasst.

Es versteht sich, dass das bezüglich des erfindungsgemäßen Verfahrens Beschriebene auch für die Anzeigeeinrichtung und das System gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1A: eine schematische Darstellung eines realen Sensors eines Systems gemäß einer Ausführungsform der Erfindung;
- Fig. 1B: eine schematische Darstellung einer Anzeigeeinrichtung gemäß einer Ausführungsform der Erfindung;
- Fig. 2A: eine schematische Darstellung eines Anzeigeeinrichtung gemäß einer Ausführungsform der Erfindung;
- Fig. 2B: eine schematische Darstellung eines Anzeigeeinrichtung gemäß einer Ausführungsform der Erfindung;
- Fig. 3A: eine Frontansicht einer Anzeigeeinrichtung gemäß einer Ausführungsform der Erfindung;
- Fig. 3B: eine Frontansicht einer Anzeigeeinrichtung gemäß einer Ausführungsform der Erfindung;
- Fig. 3C: eine Frontansicht einer Anzeigeeinrichtung gemäß einer Ausführungsform der Erfindung;
- Fig. 4A: eine Frontansicht einer Anzeigeeinrichtung gemäß einer Ausführungsform der Erfindung;
- Fig. 4B: eine Frontansicht einer Anzeigeeinrichtung gemäß einer Ausführungsform der Erfindung;
- Fig. 4C: eine Frontansicht einer Anzeigeeinrichtung gemäß einer Ausführungsform der Erfindung;
- Fig. 5A: eine Frontansicht einer Anzeigeeinrichtung gemäß einer Ausführungsform der Erfindung;
- Fig. 5B: eine Frontansicht einer Anzeigeeinrichtung gemäß einer Ausführungsform der Erfindung; und
- Fig. 6: eine Frontansicht einer Anzeigeeinrichtung gemäß einer Ausführungsform der Erfindung.

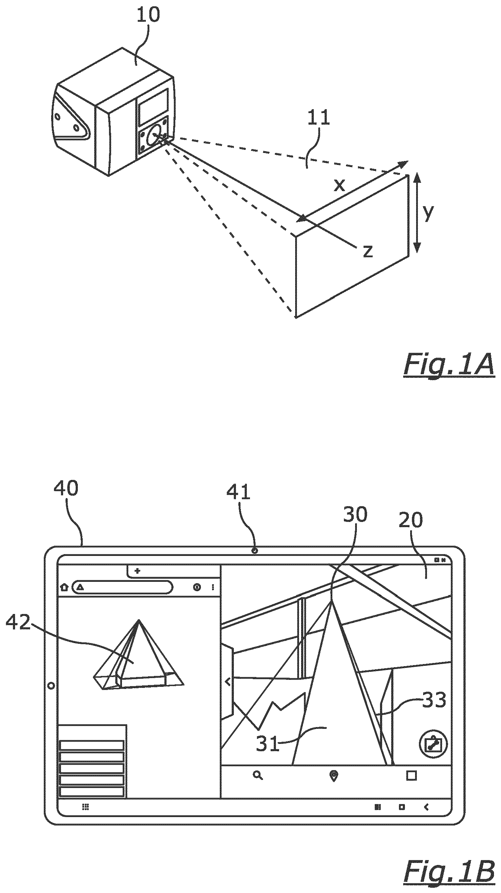

Fig.1A zeigt eine schematische Darstellung eines beispielhaften realen Sensors 10, wie er in Verbindung mit einem Verfahren, einer Anzeigeeinrichtung und einem System gemäß einer Ausführungsform der Erfindung verwendet werden kann. Der reale Sensor 10 umfasst vorzugsweise eine 3D-Kamera und insbesondere eine ToF-Kamera. Das Schutzfeld 11 des realen Sensors 10 entspricht dem Überwachungsbereich, der von den Sensoren erfasst wird, und hat eine Ausdehnung, die relativ zum Ausgangspunkt am realen Sensor 10 gesehen und/oder auch in einem globalen Koordinatensystem durch x-, y-, und z-Koordinaten definiert werden kann. Wie in Figur. 1 gezeigt kann das Schutzfeld 11 des realen Sensors 10 die geometrische Form einer Pyramide aufweisen.

Tabelle 1 zeigt beispielhaft für einen verwendbaren realen Sensor 10 die Abmessungen des Schutzfelds und des maximalen Sichtfelds bei bestimmten Reichweiten. Tabelle 2 zeigt beispielhafte erreichbare Reichweiten und Remissionswerte eines verwendbaren realen Sensors 10 bei bestimmten Objektauflösungen nach PL c (Performance Level c) des realen Sensors 10. Das Leistungsniveau c (Performance Level c, PL c) stellt ein Maß für die Zuverlässigkeit einer technischen Sicherheitsfunktion dar und wird in einer Risikobeurteilung nach Maschinenrichtlinie, z.B. nach der Norm DIN EN ISO 13849-1, für Industrieroboter bestimmt. Die Werte in Tabelle 2 geben an, bis zu welcher Reichweite eine Objektauflösung für Körper, Hand, Arm oder Beine oder Arme, Beine nach PL c erreicht wird. Die Werte aus Tabelle 1 und Tabelle 2 für einen realen Sensor können in der Augmented-Reality-Ansicht als zumindest eine geometrische Form, insbesondere als zumindest eine in Farbe dargestellte geometrische Form, visualisiert werden, und vorzugsweise als Schattierung, Transparenzverlauf und/oder als Farbverlauf in der geometrischen Form visualisiert werden.

**Tabelle 1:**

| Reichweite (z) | Schutzfeld (68° * 42°) | | Volles Sichtfeld (68° * 58°) | |
|---|---|---|---|---|
| | x | y | x | y |
| 0,2 m^{I} | 0,27 m | 0,15 m | 0,27 m | 0,22 m |
| 0,5 m | 0,68 m | 0,39 m | 0,68 m | 0,56 m |
| 1,0 m | 1,35 m | 0,77 m | 1,35 m | 1,11m |
| 1,5 m | 2,03 m | 1,14 m | 2,03 m | 1,67 m |
| 2,0 m ^{II} | 2,70 m | 1,51 m | 2,70 m | 2,22 m |
| 4,0 m ^{III} | 5,40 m | 3,02 m | 5,4 m | 4,44 m |
| 7,3 m ^{IV} | - | - | 9,85 m | 8,10 m |

| | | | | |
|---|---|---|---|---|
| ^{I} kleinste messbare Reichweite ^{II} größtes Schutzfeld ohne Hintergrund ^{III} größtes Schutzfeld mit Hintergrund ^{IV} Warnfeld | | | | |

**Tabelle 2:**

| Objektauflösung | Reichweite (stationär) | Reichweite (mobile) | Remission (%) |
|---|---|---|---|
| Hand PL c | 1 m | - | 4 |
| Arm PL c | 1,6 m | 1,6 m | 4 |
| Bein PL c | 2 m | 2 m | 4 |
| Körper PL c | 2 m | 2 m | 4 |
| Körper PL c mit vergrößerter Scanbereich ^{I} | 4 m | 4 m ^{II} | 18 |
| Nicht-sicher: 174 mm minimale Objektgröße in dem Warnfeld in maximaler Distanz von 7,3 m | 7,3 m | 7,3 m | 60 |

| | | | |
|---|---|---|---|
| Remissionsgarantie: 4 % bis zu 2 m, 18 % bis zu 4 m, 60 % bis zu 7,3 m ^{I} Der vergrößerte 4-Meter- Scanbereich kann genutzt werden, wenn der Detektionsbereich durch ein sichtbares Hintergrundobjekt, bspw. durch eine Wand oder den Boden, limitiert wird. ^{II} In mobilen Verwendungen kann der vergrößerte Scanbereich die Verfügbarkeit des Geräts beeinflussen und ist daher standardmäßig nicht empfohlen. | | | |

Die in Fig.1B schematisch dargestellte Anzeigeeinrichtung 40 gemäß einer Ausführungsform der Erfindung umfasst eine Kamera 41 und eine Benutzerschnittstelle 42. Die Anzeigeeinrichtung 40 ist dazu ausgebildet, simulierte Parameter eines virtuellen Sensors 30 für einen Anwender in einer Augmented-Reality-Ansicht 20 zu visualisieren. Der virtuelle Sensor 30 basiert dabei auf einem in einer realen Umgebung einer Industrieanlage zu positionierenden realen Sensor 10, wie er beispielhaft in Fig. 1A gezeigt ist. Die simulierten Parameter umfassen zumindest einen Positionsparameter, der eine Position und/oder eine Ausrichtung des virtuellen Sensors 30 in der Augmented-Reality-Ansicht 20 angibt, und zumindest einen Konfigurationsparameter, der eine Konfiguration des virtuellen Sensors 30 angibt, die idealerweise einer möglichen Konfiguration eines wie in Fig. 1A gezeigten realen Sensors 10 entspricht. Die Anzeigeeinrichtung 40 kann ferner dazu ausgebildet sein, die Augmented-Reality-Ansicht anlegen, indem mittels der Kamera 41 der Anzeigeeinrichtung (40) eine in der realen Umgebung angebrachte Positionsmarke (nicht in Fig. 1B gezeigt) erfasst wird.

Vorzugsweisen kann die Anzeige der Augmented-Reality-Ansicht 20 und die Benutzerschnittstelle 42 in einem Browser (der typischerweise auf einem Endgerät zur Verfügung steht) sowohl ein Frontend (z.B. ein sogenanntes Graphic User Interface, GUI) als auch ein Backend (Berechnung und Konvertierung) ausgeführt werden. Das Frontend kann dabei bestimmte Funktionalitäten umfassen, wie beispielsweise eine räumliche Darstellung von 3D-Elementen, die Sichtfeld-Geometrien, Schutzfelder, Auflösungsvermögen und/oder Detektionsvermögen der Schutzfelder, und optional die Projektionen der Schutzfelder in die Ursprünge der zugehörigen Sensoren. Möglich sind ferner sogenannte User Interface (UI)-Elemente zum Hinzufügen, Entfernen und Manipulieren der 3D-Elemente durch sogenannte Transformation Handler (auch Anfasser genannt), und UI-Elemente zum Navigieren im virtuellen Raum (Orbit Controls), d.h. Bewegen der virtuellen Kamera. Das Backend kann bestimmte Funktionalitäten umfassen wie beispielsweise Berechnung der korrekten Position und Orientierung der einzelnen 3D-Elemente im virtuellen Raum, Berechnung der korrekten Form der Schutzfelder (die bevorzugt an den Grenzen des Sichtfelds abgeschnitten werden), Berechnung der Projektionen der Schutzfelder in die Ursprünge der zugehörigen Sensoren, Reaktionen auf diverse Benutzerereignisse und - eingaben (ausgelöst durch die UI-Elemente). Zur Umsetzung können moderne Web-Technologien eingesetzt werden, wie zum Beispiel "node.js" und/oder die 3D-Bibliothek "Three.js". Dadurch kann insbesondere die auf mobilen Endgeräten begrenzte Displaygröße voll ausgenutzt werden. Es ist ebenfalls denkbar, dass die Augmented-Reality-Ansicht 20 mittels der sog. Vuforia Engine, einem leistungsfähigen Software Development Kit (SDK) für die Erstellung von Augmented Reality (AR)-Anwendungen, realisiert wird.

Wie in Fig. 1B beispielhaft gezeigt kann die Position des virtuellen Sensors 30 zusammen mit dem Schutzfeld 31 des virtuellen Sensors 30 und dem maximalen Sichtfeld 33 des virtuellen Sensors 30 in der Augmented-Reality-Ansicht 20 als mehrere geometrische Formen und insbesondere als Pyramiden visualisiert werden. Im Fig. 1B ist beispielsweise das Schutzfeld 31 des virtuellen Sensors 30 als Pyramide mit in Farbe dargestellten Seitenflächen und das maximale Sichtfeld 33 des virtuellen Sensors als Pyramide mit in Farben dargestellten Kanten visualisiert.

Die in Fig. 1B gezeigte Anzeigeeinrichtung 40 ist ferner dazu ausgebildet, mittels einer Benutzerschnittstelle 42 eine Änderung des Positionsparameters und/oder das Konfigurationsparameters durch Benutzereingabe zu erhalten. Die Benutzerschnittstelle 42 kann, wie in Fig. 1B dargestellt, eine GUI mit einem Abbild des virtuellen Sensors 30 umfassen, mit der der Anwender mittels Computermaus oder Touchpad interagieren kann. Vorzugsweise ist das Abbild des virtuellen Sensors 30 in der Benutzerschnittstelle 42 für den Anwender mittels Computermaus, Touchpad und/oder Sprachbefehl veränderbar und insbesondere verschiebbar, verdrehbar, ausdehnbar, vergrößerbar, verlängerbar, verkleinerbar und/oder verzerrbar, sodass auf diese Weise die Änderung des Positionsparameters und/oder das Konfigurationsparameters als Benutzereingabe erhalten werden kann.

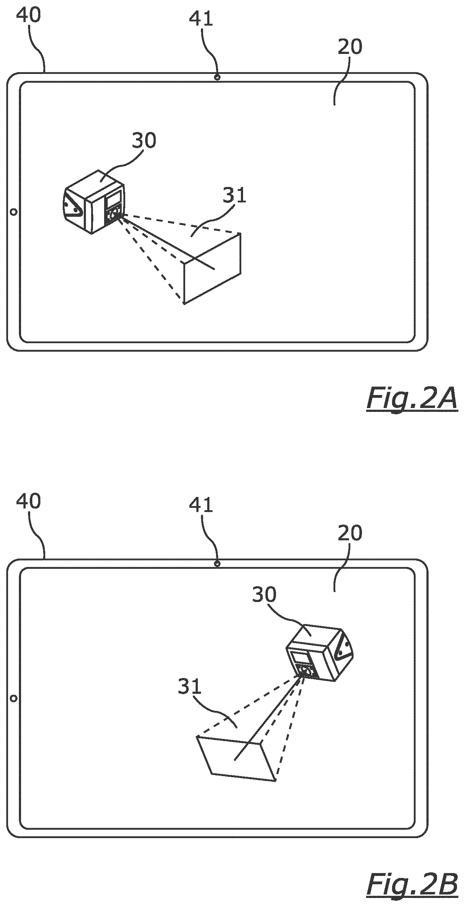

Fig. 2A und Fig. 2B zeigen schematisch eine Anzeigeeinrichtung 40 gemäß einer weiteren Ausführungsform der Erfindung. Die in Fig.2A und Fig. 2B dargestellte Anzeigeeinrichtung 40 kann die gleichen oder ähnlichen Komponenten und Funktionen wie die in Fig. 1B Anzeigeeinrichtung umfassen und ist dazu ausgebildet, die (initiale) Position des virtuellen Sensors 30 zusammen mit seinem Sichtfeld und/oder Schutzfeld für den Anwender in der Augmented-Reality-Ansicht 20 zu visualisieren. Wie in Fig. 2B gezeigt, ist die Anzeigeeinrichtung 40 ferner dazu ausgebildet, nach dem Erhalt einer Änderung des Positionsparameters des virtuellen Sensors 30 den anhand der erhaltenen Änderung aktualisierten Positionsparameter in der Augmented-Reality-Ansicht 20 für den Anwender zu visualisieren. Die Änderung des Positionsparameters kann insbesondere eine Verschiebung und/oder Verdrehung der Position und/oder Ausrichtung des virtuellen Sensors 30 umfassen. Es versteht sich, dass die Visualisierung des maximalen Sichtfelds und/oder Schutzfelds des virtuellen Sensors 30 entsprechend der Verschiebung und/oder Verdrehung der Position und/oder Ausrichtung des virtuellen Sensors 30 mit verschoben und/oder mit verdreht werden kann. Die Anzeigeeinrichtung 40 ist ferner dazu ausgebildet, mehrere Ausgabeparameter auszugegeben, welche auf dem aktualisierten Positionsparameter und dem aktualisierten Konfigurationsparameter des virtuellen Sensors 30 basieren. Auf diese Weise ist die Positionierung und/oder Konfiguration des realen Sensors 10 in der realen Umgebung ermöglicht, ohne dass der reale Sensor 10 bereits in der realen Umgebung vorpositioniert und/oder angeschlossen sein muss

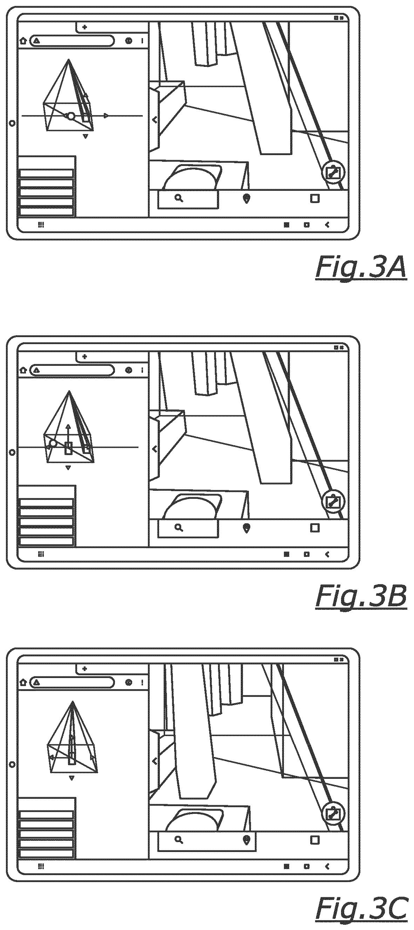

Fig. 3A, Fig. 3B und Fig. 3C zeigen Frontansichten einer Anzeigeeinrichtung 40 gemäß einer weiteren Ausführungsform der Erfindung und verdeutlichen, wie das Schutzfeld 31 des virtuellen Sensors 30 verändert werden kann. Der Anwender kann das Abbild des virtuellen Sensors 30 in der Benutzerschnittstelle 42 beispielsweise durch Anklicken und Ziehen mit der Computermaus verschieben, verdrehen, ausdehnen, vergrößern, verlängern, verkleinern und/oder verzerren. Die Visualisierung des Schutzfelds 31 des virtuellen Sensors 30 in der Augmented-Reality-Ansicht 20 wird dann anhand der durch Benutzereingabe erhaltenen Verschiebung, Verdrehung, Ausdehnung, Vergrößerung, Verlängerung und/oder Verzerrung aktualisiert und insbesondere entsprechend verschoben, verdreht, ausgedehnt, vergrößert, verlängert, verkleinert und/oder verzerrt.

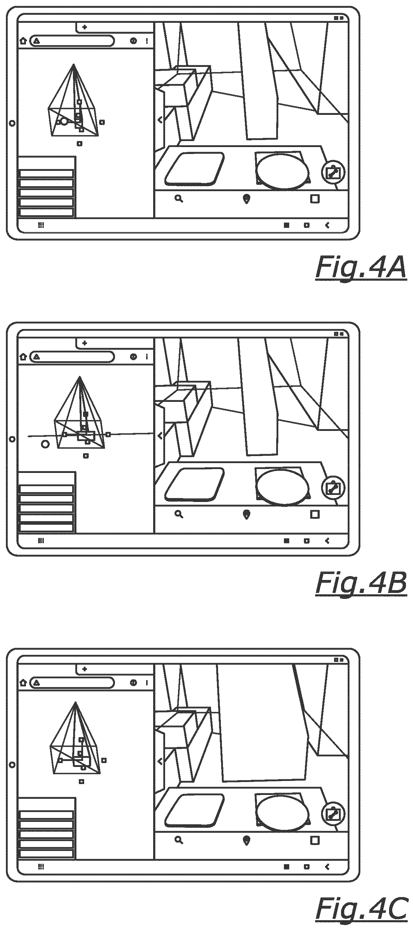

Fig. 4A, Fig. 4B und Fig. 4C zeigen Frontansichten einer Anzeigeeinrichtung 40 gemäß einer weiteren Ausführungsform der Erfindung und verdeutlichen, wie das Schutzfeld des virtuellen Sensors 30 verändert werden kann. Der Anwender kann das Abbild des virtuellen Sensors 30 in der Benutzerschnittstelle 42 beispielsweise durch Anklicken und Ziehen mit der Computermaus vergrößern. Die Visualisierung des Schutzfelds 31 des virtuellen Sensors 30 in der Augmented-Reality-Ansicht 20 wird dann anhand der durch Benutzereingabe erhaltenen Vergrößerung aktualisiert und insbesondere entsprechend vergrößert.

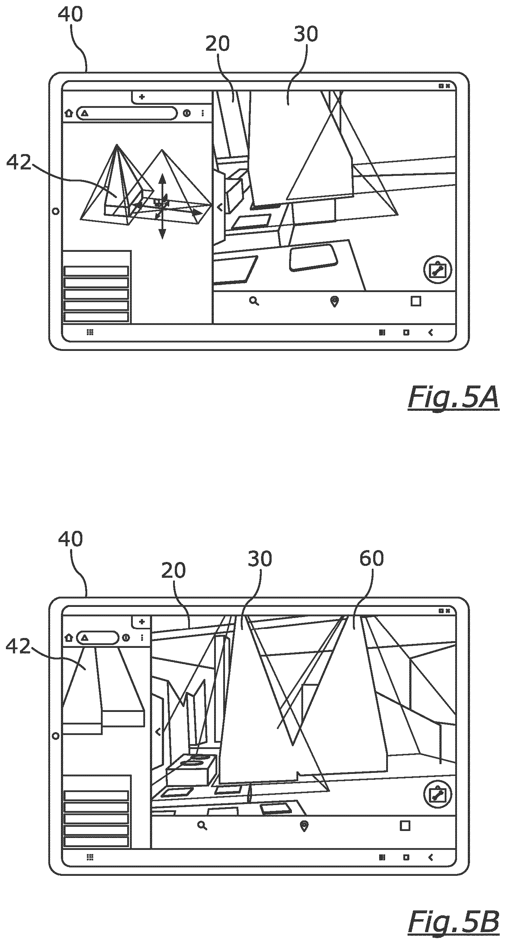

Fig. 5A und 5B zeigen Frontansichten einer Anzeigeeinrichtung 40 gemäß einer weiteren Ausführungsform der Erfindung und verdeutlichen, wie die mittels einer ersten Visulisierung in der Augmented-Reality-Ansicht 20 visualisierte Position des virtuellen Sensors 30 verändert werden kann. Der Anwender kann beispielsweise ein zweites Abbild des virtuellen Sensors 30 in der Benutzerschnittstelle 42 hinzufügen und das zweite Abbild in der Benutzerschnittstelle 42 durch Anklicken und Ziehen mit der Computermaus verschieben. In der Augmented-Reality-Ansicht 20 wird dann ebenfalls eine zweite Visualisierung 60 der Position des virtuellen Sensors 30 hinzugefügt und entsprechend verschoben angezeigt.

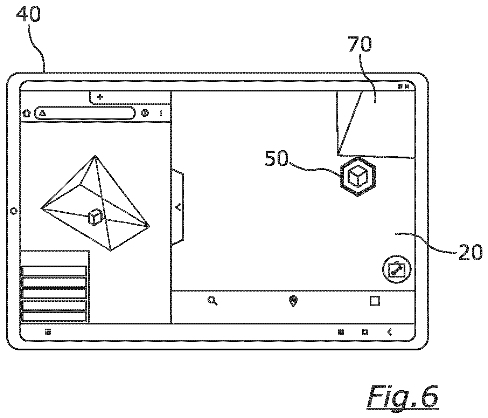

In der Fig. 6 ist eine Frontansicht einer Anzeigeeinrichtung 40 gemäß einer Ausführungsform der Erfindung dargestellt, in der die Änderung des Positionsparameters und/oder des Konfigurationsparameters durch Erfassen von einer in der realen Umgebung angebrachten Markierung 50 erhalten wird. Die Markierung 50 wird bevorzugt mit einer von der Anzeigeeinrichtung 40 umfassten Kamera 41 (nicht in Fig. 6 gezeigt) erfasst und markiert die Position eines realen Objekts oder einer Barriere 70 in der realen Umgebung. Die Position und/oder das Schutzfeld 31 des virtuellen Sensors 30 (nicht in Fig. 6 gezeigt) werden dann vorzugsweise anhand der erfassten Markierung 50 (automatisch) ausgerichtet. Genauer werden die Position und/oder das Schutzfeld 31 des virtuellen Sensors 30 bevorzugt anhand der erfassten Markierung 50 derart verändert, und insbesondere derart verschoben, verdreht, ausgedehnt, verbreitert, verlängert, verkleinert und/oder verzerrt, dass das Schutzfeld 31 des virtuellen Sensors 30, und insbesondere eine Ecke, Kante und/oder Oberfläche des Schutzfeldes 31 des virtuellen Sensors 30, mit der erfassten Markierung 50 abschließt und/oder an dieser zentriert ist und/oder einen bestimmten Abstand zu der erfassten Markierung 50 hat oder einnimmt. Auf diese Weise kann das Positionieren und/oder Konfigurieren des virtuellen Sensors 30 in der Augmented-Reality-Ansicht 20 beschleunigt werden. Zudem kann verhindert werden, dass eine unerwünschte Lücke oder ein nicht abgedeckter Bereich zwischen dem Schutzfeld 31 des virtuellen Sensors 30 und einer Visualisierung des realen Objekts 70 in der in der Augmented-Reality-Ansicht 20 und dementsprechend dem Schutzfeld 11 des realen Sensors 10 (nicht in Fig. 6 gezeigt) und dem realen Objekt 70 in der realen Umgebung verbleibt. Die anhand der Markierung 50 ausgerichtete Position und/oder das anhand der Markierung 50 ausgerichtete Schutzfeld 31 des virtuellen Sensor 30 ist dann bevorzugt fixiert und für weitere Änderungen durch den Anwender gesperrt, um Fehler bei der Änderung der Position und/oder dem Schutzfeld des virtuellen Sensors 30 zu reduzieren oder zu vermeiden.

Es wird dann ein Ausgabeparameter ausgegeben, welcher auf dem aktualisierten Positionsparameter des virtuellen Sensors 30 basiert und welcher die Positionierung des realen Sensors 10 in der realen Umgebung ermöglicht.

Der Ausgabeparameter kann beispielsweise angeben, in welcher Ausrichtung und radialem Abstand oder bei welchen x-,y-, und z-Koordinaten der reale Sensor in einem globalen Koordinatensystem, das durch Erfassen einer in der realen Umgebung angebrachten Positionsmarke mittels der Anzeigeeinrichtung erhalten werden kann, ausgehend von der Positionsmarke als Ankerpunkt, ausgehend von der Position der Anzeigeeinrichtung als Ankerpunkt oder ausgehend von der Position der Markierung 50 als Ankerpunkt positioniert werden soll. Der reale Sensor kann anhand dem Ausgabeparameter händisch oder maschinell, in der realen Umgebung positioniert, und insbesondere montiert und/oder angeschlossen, werden. Der Anwender kann beispielsweise mit einem Maßband die mit dem Ausgabeparameter ausgegeben x-, y-, und z-Koordinaten ausgehend von der Positionsmarke oder der Position der Anzeigeeinrichtung (die der Position des Anwenders entsprechen kann) abmessen und den realen Sensor an der entsprechenden Position anbringen. Nach erfolgter Positionierung des realen Sensors ist es möglich, die Daten des virtuellen und des realen Sensors in Deckung zu bringen. Auf Basis dieses Abgleichs kann überprüft werden, ob der reale Sensor korrekt positioniert und/oder konfiguriert wurde.

### Bezugszeichenliste

- 10: realer Sensor
- 11: Schutzfeld des realen Sensors
- 20: Augmented-Reality-Umgebung
- 30: virtueller Sensor
- 31: Schutzfeld des virtuellen Sensors
- 33: maximales Sichtfeld des virtuellen Sensors
- 40: Anzeigeeinrichtung
- 41: Kamera
- 42: Benutzerschnittstelle
- 50: Markierung
- 60: zweite Visualisierung der Position des virtuellen Sensors
- 70: reales Objekt

## Patentansprüche

1. Verfahren zur Positionierung zumindest eines realen Sensors (10), insbesondere eines Sicherheitssensors oder einer Kamera für industrielle Sicherheitsanwendungen, in einer realen Umgebung einer Industrieanlage mittels einer Augmented-Reality-Ansicht (20), welche auf der realen Umgebung der Industrieanlage basiert,
wobei zumindest ein simulierter Parameter eines virtuellen Sensors (30) mittels einer Anzeigeeinrichtung (40) für einen Anwender in der Augmented-Reality-Ansicht (20) visualisiert wird, wobei der virtuelle Sensor (30) auf dem zu positionierenden realen Sensor (10) basiert, wobei der simulierte Parameter zumindest einen Positionsparameter umfasst, wobei der zumindest eine Positionsparameter eine Position und/oder eine Ausrichtung des virtuellen Sensors (30) in der Augmented-Reality-Ansicht (20) angibt,
wobei eine Änderung des Positionsparameters erhalten wird, wobei der anhand der erhaltenen Änderung aktualisierte Positionsparameter mittels der Anzeigeeinrichtung (40) in der Augmented-Reality-Ansicht (20) für den Anwender visualisiert wird, und
wobei zumindest ein Ausgabeparameter ausgegeben wird, welcher auf dem aktualisierten Positionsparameter des virtuellen Sensors (30) basiert und welcher die Positionierung des realen Sensors (10) in der realen Umgebung ermöglicht.

2. Verfahren nach Anspruch 1, wobei der zumindest eine Positionsparameter des virtuellen Sensors (30) einen x-Koordinatenwert, y-Koordinatenwert, z-Koordinatenwert, und/oder einen Ausrichtungswinkel des virtuellen Sensors (30) umfasst.

3. Verfahren nach Anspruch 1 oder 2,
wobei der in der Augmented-Reality-Ansicht (20) visualisierte zumindest eine simulierte Parameter des virtuellen Sensors (30) zusätzlich zumindest einen Konfigurationsparameter umfasst,
wobei eine Änderung des Konfigurationsparameters erhalten wird, wobei der anhand der erhaltenen Änderung aktualisierte Konfigurationsparameter mittels der Anzeigeeinrichtung (40) in der Augmented-Reality-Ansicht (20) für den Anwender visualisiert wird, und wobei ein weiterer Ausgabeparameter ausgegeben wird, welcher auf dem aktualisierten Konfigurationsparameter des virtuellen Sensors (30) basiert und welcher die Konfiguration des realen Sensors (10) in der realen Umgebung ermöglicht.

4. Verfahren nach Anspruch 3, wobei der zumindest eine Konfigurationsparameter des virtuellen Sensors (30) ein maximales Sichtfeld (33), einen Anteil an dem maximalen Sichtfeld (33), eine Ausrichtung, Größe und/oder Ausdehnung eines Schutz- oder Warnfeldes (31), eine Reichweite, und/oder eine Auflösung des virtuellen Sensors (30) umfasst.

5. Verfahren nach einem der vorstehenden Ansprüche, wobei die Position des virtuellen Sensors (30) für den Anwender in der Augmented-Reality-Ansicht (20) veränderbar und insbesondere verschiebbar und/oder verdrehbar ist.

6. Verfahren nach einem der vorstehenden Ansprüche, wobei die Augmented-Reality-Ansicht (20) mittels der Anzeigeeinrichtung (40) angelegt wird.

7. Verfahren nach einem der vorstehenden Ansprüche, wobei die Anzeigeeinrichtung (40) eine Mixed-Reality-Anzeige oder Augmented-Reality-Anzeige ist, beispielsweise eine Augmented-Reality-Brille, ein Laptop, ein Smartphone und/oder ein Tablet, und wobei die Anzeigeeinrichtung (40) bevorzugt mobil ist und in der realen Umgebung bewegbar ist, um eine Perspektive der Augmented-Reality-Ansicht (20) zu verändern.

8. Verfahren nach einem der vorstehenden Ansprüche, wobei die Augmented-Reality-Ansicht (20) angelegt wird, indem
mittels der Anzeigeeinrichtung (40) eine in der realen Umgebung angebrachte Positionsmarke erfasst wird, beispielsweise ein maschinenlesbarer Code, insbesondere ein QR-Code, wobei die Positionsmarke bevorzugt mit einer von der Anzeigeeinrichtung (40) umfassten Kamera (41) erfasst wird, und
durch das Erfassen der Positionsmarke ein Modell der realen Umgebung erhalten wird, wobei durch Erfassen der Positionsmarke bevorzugt eine initiale Position der Anzeigeeinrichtung (40) in dem Modell der realen Umgebung feststellbar ist.

9. Verfahren nach einem der vorstehenden Ansprüche, wobei der zumindest eine simulierte Parameter, insbesondere der Positionsparameter und/oder der Konfigurationsparameter, als zumindest eine geometrische Form, insbesondere als zumindest eine in Farbe dargestellte geometrische Form, in der Augmented-Reality-Ansicht (20) visualisiert wird, wobei der zumindest eine simulierte Parameter, insbesondere der Positionsparameter und/oder der Konfigurationsparameter, bevorzugt zusätzlich als Textanzeige in der Augmented-Reality-Ansicht (20) visualisiert wird.

10. Verfahren nach Anspruch 8 und 9, wobei die Auflösung des virtuellen Sensors (30) in Abhängigkeit von der Reichweite als Schattierung, Transparenzverlauf und/oder als Farbverlauf in der geometrischen Form visualisiert wird.

11. Verfahren nach einem der vorstehenden Ansprüche,
wobei die Änderung des Positionsparameters und/oder des Konfigurationsparameters durch Benutzereingabe erhalten wird, und/oder wobei die Änderung des Positionsparameters und/oder des Konfigurationsparameters durch Erfassen von zumindest einer Markierung (50), Kontur und/oder Oberfläche in der realen Umgebung erhalten wird, wobei die Markierung (50), Kontur und/oder Oberfläche bevorzugt mit einer von der Anzeigeeinrichtung (40) umfassten Kamera (41) erfasst wird, wobei die Position und/oder das Schutzfeld (31) des virtuellen Sensors (30) in der Augmented-Reality-Ansicht (20) bevorzugt anhand der erfassten Markierung (50), Kontur und/oder Oberfläche in der realen Umgebung ausgerichtet wird, wobei die Position und/oder das Schutzfeld (31) des virtuellen Sensors (30) bevorzugt anhand der erfassten Markierung (50), Kontur und/oder Oberfläche derart verändert werden, und insbesondere derart verschoben, verdreht, ausgedehnt, verbreitert, verlängert, verkleinert und/oder verzerrt werden, dass das Schutzfeld (31) des virtuellen Sensors (30) mit der erfassten Markierung (50), Kontur und/oder Oberfläche abschließt und/oder an der erfassten Markierung (50) zentriert ist und/oder einen bestimmten Abstand zu der erfassten Markierung (50) hat.

12. Verfahren nach einem der vorstehenden Ansprüche,
wobei der aktualisierte Positionsparameter und/oder der aktualisierte Konfigurationsparameter fixierbar und/oder unveränderbar ist; und/oder wobei eine verbotene Änderung des Positionsparameters und/oder des Konfigurationsparameters des virtuellen Sensors (30) in der Augmented-Reality-Ansicht (20) als Färbänderung der geometrischen Form visualisiert wird.

13. Verfahren nach einem der vorstehenden Ansprüche, wobei der reale Sensor (10) basierend auf dem Ausgabeparameter in der realen Umgebung positioniert wird, wobei der in der realen Umgebung positionierte reale Sensor (10) reale Messdaten erfasst, wobei durch Vergleich von mit dem virtuellen Sensor (30) erfassten simulierten Messdaten mit den realen Messdaten eine Validierung der Positionierung und/oder der Konfiguration des realen Sensors (10) in der realen Umgebung vorgenommen wird, wobei vorzugsweise ein Unterschied zwischen den realen und simulierten Messdaten erkannt und/oder für den Anwender mittels der Anzeigeeinrichtung (40) in der Augmented-Reality-Ansicht (20) visualisiert wird, und wobei vorzugsweise auf den visualisierten Unterschied hin die Positionierung und/oder die Konfiguration des realen Sensors (10) in der realen Umgebung mittels der Augmented-Reality-Ansicht (20) durch Verändern und insbesondere durch Verschieben und/oder Verdrehen der Position des virtuellen Sensors (30) in der Augmented-Reality-Ansicht (20) und Ausgabe eines aktualisierten Ausgabeparameters iteriert wird.

14. Anzeigeeinrichtung (40) zur Positionierung zumindest eines realen Sensors (10), insbesondere eines Sicherheitssensors oder einer Kamera für industrielle Sicherheitsanwendungen, in einer realen Umgebung einer Industrieanlage mittels einer Augmented-Reality-Ansicht (20), welche auf der realen Umgebung der Industrieanlage basiert, wobei die Anzeigeeinrichtung (40) dazu ausgebildet ist,
zumindest einen simulierten Parameter eines virtuellen Sensors (30) für einen Anwender in der Augmented-Reality-Ansicht (20) zu visualisieren, wobei der virtuelle Sensor (30) auf dem zu positionierenden realen Sensor (10) basiert, wobei der simulierte Parameter zumindest einen Positionsparameter umfasst, wobei der zumindest eine Positionsparameter eine Position und/oder eine Ausrichtung des virtuellen Sensors (30) in der Augmented-Reality-Ansicht (20) angibt,
eine Änderung des Positionsparameters zu erhalten, den anhand der erhaltenen Änderung aktualisierten Positionsparameter in der Augmented-Reality-Ansicht (20) für den Anwender zu visualisieren, und einen Ausgabeparameter auszugegeben, welcher auf dem aktualisierten Positionsparameter des virtuellen Sensors (30) basiert und welcher die Positionierung des realen Sensors (10) in der realen Umgebung ermöglicht.

15. System zur Positionierung zumindest eines realen Sensors (10), insbesondere eines Sicherheitssensors oder einer Kamera für industrielle Sicherheitsanwendungen, in einer realen Umgebung einer Industrieanlage mittels einer Augmented-Reality-Ansicht (20), welche auf der realen Umgebung der Industrieanlage basiert, wobei das System eine Anzeigeeinrichtung (40) nach Anspruch 14 und den zumindest einen realen Sensor (10) umfasst.
